# EUROPÄISCHE PATENTSCHRIFT

(11) **EP 0 347 427 B1**
(45) Veröffentlichungstag und Bekanntmachung des Hinweises auf die Patenterteilung: **06.10.1993**
(21) Anmeldenummer: 88903762.8
(22) Anmeldetag: 05.05.1988
(51) Int. Cl.: H05B 41/392, H02M 7/538

(54) **SCHALTUNGSANORDNUNG ZUM BETRIEB EINER GASENTLADUNGSLAMPE AN EINER GLEICHSTROMQUELLE**
CIRCUIT ARRANGEMENT FOR OPERATING A GAS DISCHARGE LAMP ON A DIRECT CURRENT SOURCE
CIRCUIT POUR FAIRE FONCTIONNER UNE LAMPE LUMINESCENTE A GAZ SUR UNE SOURCE DE COURANT CONTINU

(30) Priorität: 07.05.1987 DE 3715162
(43) Veröffentlichungstag der Anmeldung: 27.12.1989
(73) Patentinhaber: ROBERT BOSCH GMBH, 70442 Stuttgart (DE)
(72) Erfinder: DOMANN, Helmut, D-7250 Leonberg (DE); RUPP, Hartmann, D-7140 Ludwigsburg (DE)
(86) Internationale Anmeldenummer: DE8800264
(87) Internationale Veröffentlichungsnummer: WO8809108

(56) Entgegenhaltungen:
- DE-A- 2 642 972
- FR-A- 2 514 212
- US-A- 4 396 872
- Patent Abstracts of Japan,volume 6,N0 179 (P-149)(1057),14 September1982 & JP, A, 5793416 (SHIMAZU SEISAKUSHO)10 June 1982

## Beschreibung

Die Erfindung geht aus von einer Schaltungsanordnung zum Betreiben einer Hochdruck-Gasentladungslampe an einer Gleichstromquelle nach der Gattung des Hauptanspruchs. Aus der US-PS 4 396 872 ist ein Vorschaltgerät für Hochleistungs-Gasentladungslampen bekannt, das einen Wechselrichter zur Erzeugung der Vorsorgungsspannung der Lampe sowie einen Leistungsregler enthält, der an seinem Eingang von der Lampenspannung und vom Lampenstrom abgeleitete Steuersignale erhält zur Versorgung der Gasentladungslampe mit einer vorgebbaren Leistung. Mit der bekannten Vorrichtung ist ein Betreiben der Lampe mit konstanter Leistung möglich. Der Leistungsregler enthält einen Taktgenerator zum Erzeugen einer bestimmten Betriebsfrequenz der Gasentladungslampe. Der Taktgenerator ist in Form von Software innerhalb eines Mikroprozessors des Leistungsreglers realisiert.

Aus der EP-A 0 114 370 ist ein Vorschaltgerät für Niederdruck-Gasentladungslampen bekannt, das eine Resonanzzündung der Niederdruck-Gasentladungslampe vorsieht. Das Vorschaltgerät ist als selbstschwingende Halbbrückenschaltung aufgebaut.

Der Erfindung liegt die Aufgabe zugrunde, eine einfache Schaltungsanordnung zum Betreiben einer Hochdruck-Gasentladungslampe an einer Gleichstromquelle anzugeben, die auch eine Zündung ermöglicht.

Die Aufgabe wird durch die im Hauptanspruch angegebenen Merkmale gelöst.

### Vorteile der Erfindung

Die erfindungsgemäße Schaltungsanordnung weist den Vorteil auf, das es in besonders einfacher und vorteilhafter Weise möglich ist, die Hochdruck-Gasentladungslampe mit vorgebbarer, insbesondere konstanter Leistung und somit konstanter Helligkeit zu betreiben, und weiterhin auch die zur Wiederzündung einer noch heißen Hochdrucklampe notwendige Zündspannung zur Verfügung zu stellen.

Vorteilhafte Weiterbildungen und Verbesserungen der erfindungsgemäßen Schaltungsanordnung ergeben sich aus Unteransprüchen.

Besonders vorteilhaft ist die Maßnahme, daß die Impedanz des vorgesehenen Reihenkondensators die Impedanz der Drossel soweit kompensiert, daß bei gegebener Lampenspannung der zum Betreiben der Gasentladungslampe erforderliche maximale Lampenstrom bestimmt ist. Durch diese Abstimmung ergeben sich die geringsten Bauteilekosten.

Eine besonders vorteilhafte Weiterbildung sieht vor, daß die vorgesehene Drossel eine gezielt herausgebildete Streuinduktivität des Transformators ist. Mit dieser Maßnahme kann die Drossel als separates Bauteil eingespart werden.

Eine andere vorteilhafte Weiterbildung der erfindungsgemäßen Schaltungsanorndung sieht das Betreiben der Hochdruck-Gasentladungslampe mit unterschiedlichen Leistungen während der Zünd- und Warmlaufphase im Vergleich zum späteren Dauerbetrieb der Lampe vor. Einer einfachen Ausgestaltung gemäß ist die zu dieser Steuerung erforderliche Nachbildung einer Leistungs-Hyperbel innerhalb eines Funktionsblocks mit zwei Geraden nachgebildet.

Weitere vorteilhafte Weiterbildungen und Verbesserungen der erfindungsgemäßen Schaltungsanordnung ergeben sich aus weiteren Unteransprüchen in Verbindung mit der folgenden Beschreibung.

### Zeichnung

Ein Ausführungsbeispiel der Erfindung ist in der Zeichnung dargestellt und in der nachfolgenden Beschreibung näher erläutert. Es zeigen Figur 1 das Prinzip der erfindungsgemäßen Schaltungsaordnung, Figur 2 den Leistungsregler des Wechselrichters, Figur 3 den Verlauf der Spannung am Ausgang des Wechselrichters und Figur 4 den Aufbau des Transformators.

### Beschreibung des Ausführungsbeispieles

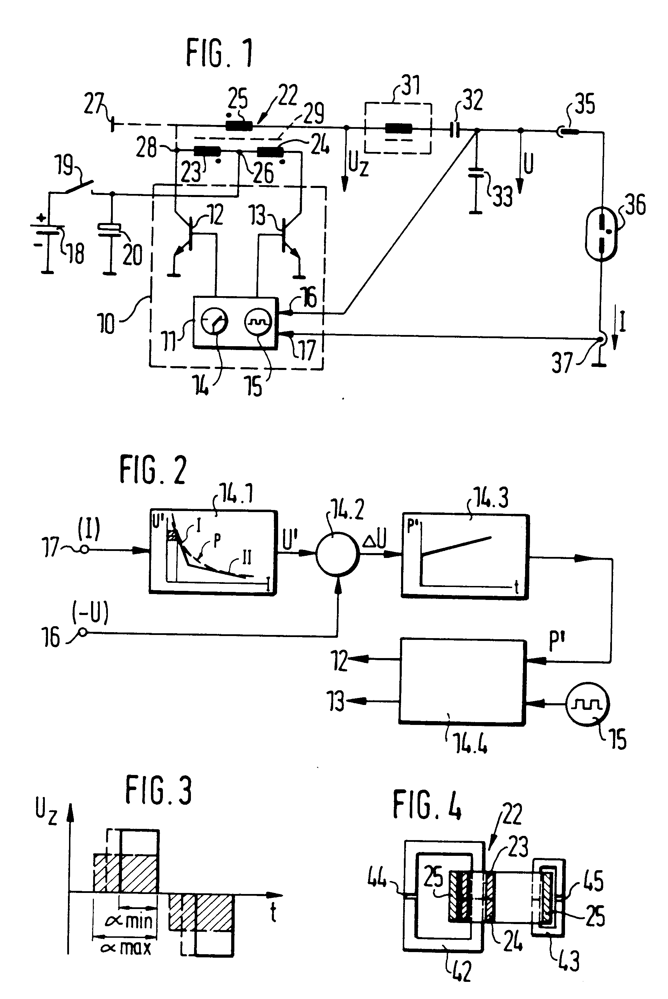

In Figur 1 ist der Gesamtaufbau des Wechselrichters mit 10 bezeichnet. Dieser enthält im wesentlichen einen Leistungsregler 11 sowie zwei Leistungstransistoren 12 und 13. Hauptbestandteile des Leistungsreglers 11 sind eine anhand von Figur 2 später noch ausführlich erläuterte Schalteinrichtung 14 zur abwechselnden, Puls-Pausen-modulierten Ansteuerung der Transistoren 12 und 13 sowie ein Taktgenerator 15. Die Eingänge des Leistungsreglers 11 sind mit 16 und 17 bezeichnet, wobei am Eingang 16 die an der Gasentladungslampe anliegende Spannung U und am Steuereingang 17 der Lampenstrom I zugeführt werden. Die Versorgung der Schaltungsanordnung erfolgt aus einer Gleichstromquelle 18 über einen Schalter 19 und einen Glättungskondensator 20.

Ein zum Hochtransformieren der Speisespannung benötigter Transformator ist mit 22 bezeichnet. Dieser besitzt eine erste Primärwicklung 23 und eine zweite Primärwicklung 24 mit gleichem Wickelsinn wie die erste Primärwicklung sowie eine Sekundärwicklung 25. Die beiden Primärwicklungen 23 und 24 sind mit ihrem einen Ende jeweils mit dem Kollektor eines der beiden Transistoren 12 und 13 verbunden, mit ihren anderen Enden sind sie in einem Verbindungspunkt 26 zusammengeschaltet und mit der Gleichstromquelle 18 verbunden. Die Sekundärwicklung 25 ist ihrem einen Ende Vorzugsweise mit einem Masseanschluß 27 verbunden, es ist jedoch auch möglich, dieses Ende der Sekundärwicklung 25 nach Art eines Spartransformators im Punkt 28 mit der Primärwicklung 23 zu verbinden. Der Kern des Transformators ist in Figur 1 nur schematisch durch eine gestrichelte Linie 29 markiert.

An die Sekundärwicklung 25 des Transformators 22 ist ein Reihenschwingkreis mit einer Drossel 31, einem Reihenkondensator 32 und einem Parallelkondensator 33 angeschlossen. Zwischen den Kondensatoren 32 und 33 wird in einem Anschlußpunkt 35 einerseits die Gasentladungslampe 36 angeschlossen und andererseits die an der Lampe anliegende Spannung U für den Leistungsregler 11 abgegriffen. Der Versorgungskreis der Gasentladungslampe 36 schließt sich über einen Stromwandler 37 zur Masse 27. Der Stromwandler kann jedoch auch in den massefernen Anschluß der Gasentladungslampe eingefügt werden, was den Vorteil hat, daß die Gasentladungslampe mit ihrem anderen Anschluß ohne zusätzliches Kabel direkt an Kraftfahrzeug-Masse gelegt werden kann. Über den Stromwandler 37 wird die Größe des Lampenstromes abgegriffen. Die Lampenspannung U wird dem Leistungsregler 11 am Steuereingang 16, der Lampenstrom I am Steuereingang 17 zugeführt.

Figur 2 zeigt den Leistungsregler 11 als Blockschaltbild. Am Steuereingang 17 wird ein dem Lampenstrom I proportionaler, entsprechend dem Übersetzungsverhältnis des Stromwandlers 37 transformierter Strom I einem Funktionsblock 14.1 zugeführt. In diesem Funktionsblock ist die einer vorgegebenen Lampenleistung P entsprechende Hyperbel im Koordinatensystem U'/I durch zwei Geraden angenähert. Die linke, steilere Gerade I, markiert dabei den Arbeitsbereich der Gasentladungslampe 36, auf der rechten, flacheren Gerade II liegen die Funktionswerte unmittelbar nach dem Zünden der Lampe während es Anlaufvorganges.

Die Spannung U' am Ausgang des Funktionsblockes 14.1 ist entsprechend dem im Funktionsblock eingetragenen Schwankungsbereich veränderlich und entspricht dem Sollwert der Lampenspannung zur Einregulierung einer konstanten Lampenleistung. Die Ausgangsspannung U' des Funktionsblockes 14.1 wird in einem Vergleicher 14.2 verglichen mit der am Steuereingang 16 anliegenden, negierten Lampenspannung U. Am Ausgang des Vergleichers 14.2 ergibt sich eine Differenzspannung U, welche einem Signalblock 14.3, im Ausführungsbeispiel einem Proportional-Integral-Regler, zugeführt wird. Dieser wiederum gibt an seinem Ausgang ein dem Sollwert der Lampenleistung entsprechendes Signal P' ab, welches mit der Spannungsdifferenz U veränderlich ist.

Das dem Sollwert der Lampenleistung entsprechende Signal P' wird zusammen mit dem Signal des Taktgenerators 15 einem Puls-Pausen-Modulationsblock 14.4 zugeführt, welcher entsprechend dem Sollwert der Leistung mit fester Frequenz, aber veränderlicher Impuls-Pausen-Zeiten abwechselnd die beiden Transistoren 12 und 13 in den leitfähigen Zustand steuert. Hierdurch wird über den Transformator 22 an der Gasentladungslampe 36 stets die vorgegebene, gleichbleibende Leistung zum Betrieb der Lampe mit gleichbleibender Helligkeit bereitgestellt.

Figur 3 zeigt den Verlauf der Spannung am Ausgang des Transformators 22. Hierin bedeuten min die Mindesteinschaltdauer der Transistoren 12 und 13, max die größtmögliche Einschaltdauer der Transistoren, wobei der dazwischenliegende Bereich zur Regelung der Lampenleistung zur Verfügung steht.

Figur 4 zeigt einen Transformator mit gezielt herausgebildeter Streuinduktivität, wodurch die Einschaltung einer separaten Drossel 31 entbehrlich wird. Der Transformator ist insgesamt wiederum mit 22 bezeichnet, die beiden Primärwicklungen 23 und 24 sitzen auf einem Schenkel eines ersten Magnetkerns 42, während die Sekundärwicklung 25 einen zweiten Magnetkern 43 mit umschließt. Der erste Magnetkern 42 besitzt einen Luftspalt 44, der zweite Magnetkern 43 einen Luftspalt 45. Die Streuinduktivität dieser Anordnung ist ausreichend, um die Drossel 31 zu ersetzen. Der Reihenschwingkreis wird in diesem Fall durch die Streuinduktivität des Transformators 22 in Verbindung mit dem Reihenkondensator 32 und dem Parallelkondensator 33 bildet. Eine separate Wicklung auf dem Transformator ist nicht erforderlich, es genügt der zusätzliche zweite Magnetkern 43 zur Erzeugung einer gezielten Streuinduktivität. Die beiden Primärwicklungen 23 und 24 und die Sekundärwicklung 25 haben den Magnetkern 42 mit der zugehörigen magnetischen Leitfähigkeit gemeinsam. Der Sekundärwicklung 25 ist zusätzlich der zweite Magnetkern 43 zugeordnet mit der ihm eigenen magnetischen Leitfähigkeit, der magnetische Widerstand des zweiten Magnetkerns 43 ist demzufolge dem magnetischen Widerstand des ersten Magnetkerns 42 parallel geschaltet. Die magnetischen Leitfähigkeiten der beiden Kerne addieren sich. Hierdurch ergeben sich Spuleninduktivitäten für die Sekundärwicklung, welche sich in die Induktivitäten der beiden Magnetkerne 42 und 43 unterteilen lassen. Die Sekundärwicklung wirkt dabei wie eine Reihenschaltung zweier Einzelspulen mit gleicher Windungszahl mit separaten Kernen. Die Streuinduktivität entsprechend dem Magnetkern 43 dient dabei als Resonanzkreis-Element zur Erzeugung der Zündspannung für die Gasentladungslampe 36 und gleichzeitig zur Strombegrenzung, sobald die Gasentladungslampe brennt. Dabei wirkt für den Resonanzschwingkreis 31, 32, 33 die Induktivität entsprechend dem Magnetkern 42 nicht als Reiheninduktivität, so daß die Resonanzfrequenz hierdurch nicht beeinflußt wird. Die Induktivitäten der beiden Primärwicklungen 23 und 24 sind gleich, die Induktivität der Sekundärwicklung in Verbindung mit dem ersten Magnetkern 42 ist entsprechend dem Quadrat des Windungsverhältnisses (ü²) davon verschieden. Durch diese Ausgestaltung des Transformators 22 wird also eine Wicklung weniger benötigt gegenüber einer separaten Drossel 31 und der Gesamtaufbau der Schaltungsanordnung kann kompakter gestaltet werden.

Die Steuerung der Gasentladungslampe 36 auf konstante Leistungsaufnahme erfolgt in Abhängigkeit von den Größen Lampenstrom und Lampenspannung. Die Überwachung der Lampenleistung könnte also mit Hilfe eines Multiplizierers erfolgen, welcher aus den gemessenen Größen Lampenstrom und Lampenspannung als Produkt die jeweils anliegende Lampenleistung ermittelt.

Der anhand von Figur 2 gezeigte Aufbau des Leistungsreglers 11 benötigt keinen Multiplizierer sondern bildet aus einem der beiden Eingangswerte Lampenstrom oder Lampenspannung einen Sollwert für die Steuerung der Transistoren 12 und 13. Bei der Ausführung gemäß Figur 2 wird der Istwert des Lampenstromes dem Funktionsblock 14.1 zugeführt, welcher als Leistungsfunktion eine Hypherbel enthält, die näherungsweise durch zwei Geraden I und II nachgebildet ist. Vor dem Zündvorgang der Gasentladungslampe 36 wird ein Wechselstrom mit erhöhter Frequenz am Ausgang des Transformators 22 bereitgestellt, die Resonanzfrequenz des Reihenschwingkreises 31, 32, 33 ist auf diese erhöhte Frequenz abgestimmt. Die Gasentladungslampe erhält bei kalter Lampe, unmittelbar nach dem Zünden, einen erhöhten Anlaufstrom, welcher durch den Bereich der rechten, flacheren Gerade II des Funktionsblockes 14.1 gesteuert wird. Die Lampenspannung ist in diesem Bereich niedrig. Durch Teilung der Frequenz des Taktgenerators 15 wird nach Abschluß des Zündvorganges im Dauerbetrieb der Gasentladungslampe 36 am Ausgang des Transformators ein Lampenstrom und eine Lampenspannung niedrigerer Frequenz zur Verfügung gestellt, so daß die Drossel 31 oder die Streuinduktivität des Transformators 22 den Lampenstrom I begrenzt. Entsprechend der linken, steileren Gerade I im Funktionsblock 14.1 entspricht diesem reduzierten Strom eine Sollspannung U', welche dem Vergleicher 14.2 zugeführt wird. Als zweite Eingangsgröße erhält der Vergleicher die negierte Größe der Lampen-Istspannung und bildet hieraus eine Differenzspannung, welche der Abweichung der tatsächlichen Lampenleistung von ihrem Sollwert entspricht. Der Sollwert der Lampenleistung ist die Führungsgröße des Leistungsreglers 11. Sie wird gebildet in dem Signalblock 14.3 entsprechend der Größe von U und dann vom Signalblock 14.3 dem PPM-Block 14.4 zugeführt, welcher die beiden Transistoren 12 und 13 steuert. Der Signalblock 14.3 arbeitet proportional-integral.

Grundsätzlich kann der Funktionsblock 14.1 auch im Spannungszweig vorgesehen werden, hiermit läßt sich die gleiche Regelung realisieren.

Die Soll-Lampenleistung entspricht bei der Darstellung gemäß Figur 2 entsprechend der Funktion des Funktionsblockes 14.1 dem Produkt aus Sollwert der Lampenspannung und Istwert des Lampenstromes. Der Bereich, in dem die Brennspannung der Gasentladungslampe im Normalfall liegt, ist innerhalb des Funktionsblockes 14.1 schraffiert.

Die erfindungsgemäße Schaltungsanordnung eignet sich hervorragend zur Speisung einer Gasentladungslampe 36 mit konstanter Leistung, d.h. zum Betrieb mit konstanter Helligkeit, obwohl die Spannung der speisenden Gleichstromquelle 18 in nicht unerheblichem Maße Schwankungen unterliegt. Dieser Fall kann insbesondere auftreten bei der Verwendung der Schaltungsanordnung in Kraftfahrzeugen, wo die Speisespannung durch Lade- und Entladezyklen erheblichen Schwankungen unterliegt. Dieser Sachverhalt ist in Figur 3 schematisch dargestellt. Die Einschaltdauer der Transistoren 12 und 13 kann schwanken im Bereich min und max, durch Schwankungen der Versorgungsspannung schwankt aber auch die Speisespannung der Gasentladungslampe 36. Die Darstellung in Figur 3 soll zeigen, daß durch Regelung der Einschaltdauer der Transistoren 12 und 13 das Flächenintegral der Speisespannung der Gasentladungslampe konstant gehalten wird, wobei je nach Höhe der Versorgungsspannung und der hierdurch bedingten Schwankungen am Ausgang des Transformators 22 die Einschaltdauer der Transistoren 12 und 13 verändert und somit das Spannungsintegral konstant gehalten wird.

Mit der erfindungsgemäßen elektronischen Schaltungsanordnung wird die Versorgung der Gasentladungslampe 36 mit konstanter Leistung in besonders einfacher und betriebssicherer Weise gelöst. Die an der Gleichstromquelle 18 zur Verfügung stehende Versorgungsspannung mit einem Nennwert von beispielsweise 12 oder 24 Volt wird in eine Wechselspannung geeigneter Höhe und Frequenz umgewandelt. Dabei ist die von dem Taktgenerator 15 gelieferte Taktfrequenz auf die Resonanzfrequenz des Reihenschwingkreises 31, 32, 33 abgestimmt und erlaubt somit die Versorgung der Gasentladungslampe 36 mit einer Zündspannung mit Spitzenwerten von 1 bis 8 kV, bei Xenonlampen auch mit 10 kV oder noch höheren Warten. Durch Frequenzteilung wird für den Dauerbetrieb der Gasentladungslampe 36 eine Wechselspannung mit niedrigerer Frequenz bereitgestellt, so daß die Drossel 31, bzw. die Streuinduktivität des Transformators 22 als Strombegrenzung mit reduziertem Blindwiderstand wirksam wird. Eine gebräuchliche Gasentladungslampe 36 hat eine Leistung von 35 Watt bei einer Brennspannung von ca. 100 Volt, was einem Lampenstrom von 0,35 Ampere entspricht. Die erfindungsgemäße Schaltungsanordnung gleicht auch fertigungsbedingte Unterschiede in der Lampenbrennspannung aus, weil auch in diesem Fall auf die vorgegebene Versorgungsleistung der Gasentladungslampe 36 geregelt wird.

Bei der in Figur 1 dargestellten Schaltungsanordnung ist das eine Ende der Sekundärwicklung 25 des Transformators 22 wahlweise mit Masse 27 oder mit einem Anschluß 28 an der Primärwicklung 23 verbunden. Im letztgenannten Fall kann beim Transformator 22 Kupfer eingespart werden, weil nach Art eines Spartransformators die Windungszahl der Primärwicklung 23 für die Bildung der Sekundärwicklung 25 mitbenutzt wird. Allerdings wird hierbei der Nachteil in Kauf genommen, daß die Schaltungsanordnung nicht kurzschlußsicher ist, weil der Sekundärkreis des Transformators und die Lampenversorgung dauernd mit der Gleichstromquelle 18 verbunden sind. Voraussetzung für die Sparschaltung ist, daß die Primärwicklung 23 und die Sekundärwicklung 25 gleichen Wickelsinn haben.

Für die Verwendung in Kraftfahrzeugen geeignete Gasentladungslampen 36 arbeiten mit einer Brennfrequenz von 9300 Hz, die Zündfrequenz und somit auch die notwendige Taktfrequenz des Taktgenerators 15 ist um den sechsfachen Betrag höher. Zum Zünden werden die Transistoren 12 und 13 mit der höheren Taktfrequenz angesteuert, um die größtmögliche Spannungsüberhöhung zum Zünden der Gasentladungslampe 36 zu erreichen, weil in diesem Fall die Resonanzfrequenz des nachfolgenden Schwingkreises 31, 32, 33 erreicht ist. Die am Kondensator 33 anliegende Spannung entspricht der Spannung an der Gasentladungslampe 36 und reicht aus, um diese sowohl im kalten wie auch im warmen Zustand zu zünden. Die Dimensionierung der Kondensatoren C1 und C2 ist so vorgenommen, daß die Resonanzfrequenz des Schwingkreises im wesentlichen durch die Kapazität des Kondensators 33 bestimmt wird. Im Ausführungsbeispiel hat der Parallelkondensator 33 eine Kapazität von 1,25 nF, der Reihenkondensator 32 eine Kapazität von 68 nF. Weiterhin ist die Dimensionierung der Kondensatoren 32 und 33 dadurch bestimmt, daß der Reihenkondensator 32 die Drossel 31 oder die entsprechende Streuinduktivität des Transformators 22 soweit kompensiert, daß dadurch bei gegebener Ausgangsspannung des Transformators 22 der maximale Strom durch die Gasentladungslampe 36 festgelegt wird.

Der Leistungsregler 11 wirkt in Verbindung mit den Transistoren 12 und 13 als Gegentaktzerhacker und wandelt die zur Verfügung stehende Versorgungsspannung der Gleichstromquelle 18 in die erforderliche Wechselspannung geeigneter Höhe und Frequenz um. Dadurch, daß die Transistoren 12 und 13 in weiten Bereichen nahezu beliebig gesteuert werden können, ist es möglich, daß die Brennfrequenz und die Zündfrequenz im beliebigen Verhältnis zueinander stehen können. Es ist also nicht erforderlich, daß die der Resonanzfrequenz des Schwingkreises 31, 32, 33 entsprechende Zündfrequenz der Gasentladungslampe 36 ein ungeradzahliges Vielfaches der Brennfrequenz beträgt, umd die beste Resonanzüberhöhung zu erzielen.

Für den Fall, daß die Sekundärwicklung 25 nach Art eines Spartransformators mit der Primärwicklung 23 verbunden ist, dient der Reihenkondensator 32 gleichzeitig auch dazu, Gleichstromanteile aus dem Lampenstrom fernzuhalten. Hierdurch wird eine einseitige Abnützung der Lampenelektroden` wie sie bei Gleichstromanteilen auftritt, vermieden. Bei dem Anschluß eines Endes der Sekundärwicklung 25 an Masse 27 sind keine Gleichstromanteile im Speisestrom der Gasentladungslampe 36 enthalten. In diesem Fall dient der Reihenkondensator 32 nur zur Blindwiderstands-Kompensation.

## Patentansprüche

1. Schaltungsanordnung zum Betreiben einer Hochdruck-Gasentladungslampe (36) an einer Gleichstromquelle (18), insbesondere in einem Kraftfahrzeug, mit einem Wechselrichter (12, 13) und mit einem Leistungsregler (11), der an seinem Eingang (16, 17) von der Lampenspannung und vom Lampenstrom abgeleitete Steuersignale und von einem Taktgenerator (15) gelieferte Steuerimpulse erhält zur Versorgung der Lampe (36) mit im wesentlichen konstanter Leistung im Dauerbetrieb, dadurch gekennzeichnet, daß ein von dem Wechselrichter (12, 13) gespeister Transformator (22) zur Erzeugung der Versorgungsspannung der Lampe (36) vorgesehen ist, daß der Lampe (36) eine Reihenschaltung aus einer Drossel (31) und einem ersten Kondensator (32) vorgeschaltet ist, daß der Lampe (36) ein zweiter Kondensator (33) parallel geschaltet ist, wobei die Kondensatoren (32, 33) so bemessen sind, daß der zur Lampe (36) parallel geschaltete Kondensator (33) im wesentlichen die Resonanzfrequenz eines aus der Drossel (31), dem ersten Kondensator (32) und dem zweiten Kondensator (33) gebildeten Reihenschwingkreis bestimmt, und daß der Taktgenerator (15) den Leistungsregler (11) zum Zünden der Lampe (36) mit der Resonanzfrequenz des Reihenschwingkreises (31, 32, 33) versorgt, wobei die Zündfrequenz ein Vielfaches der Brennfrequenz der Lampe (36) beträgt.

2. Schaltungsanordnung nach Anspruch 1, dadurch gekennzeichnet, daß die Impedanz des Reihenkondensators (32) die Impedanz der Drossel (31) soweit kompensiert, daß bei gegebener Lampenspannung (U) der zum Betreiben der Gasentladungslampe (36) erforderliche maximale Lampenstrom bestimmt ist.

3. Schaltungsanordnung nach Anspruch 1 oder 2, dadurch gekennzeichnet, daß die Kapazitäten der beiden Kondensatoren (32, 33) im Verhältnis Reihenkondensator (32) zu Parallelkondensator (33) wie 100:1 bis 10:1, vorzugsweise im Verhältnis 60:1 bis 50:1 bemessen sind.

4. Schaltungsanordnung nach einem der Ansprüche 1 oder 3, dadurch gekennzeichnet, daß die Drossel (31) eine gezielt herausgebildete Streuinduktivität des Transformators (22) ist.

5. Schaltungsanordnung nach Anspruch 4, dadurch gekennzeichnet, daß die Induktivität der Drossel (31) durch einen zusätzlichen Magnetkern (43) des Transformators (22) ohne separate Wicklung herausgebildet ist.

6. Schaltungsanordnung nach Anspruch 5, dadurch gekennzeichnet, daß eine Primärwicklung (23) und eine Sekundärwicklung (24) des Transformators (22) einen gemeinsamen Kern (42) besitzen und daß der Sekundärwicklung (25) der zusätzliche Kern (43) zugeordnet ist, der dem gemeinsamen Kern (42) bezüglich des magnetischen Widerstandes parallel geschaltet ist.

7. Schaltungsanordnung nach einem der vorhergehenden Ansprüche, dadurch gekennzeichnet, daß in Reihe mit der Lampe (36) ein Stromwandler (37) geschaltet ist, an dem der Istwert des Lampenstroms (I) abgreifbar ist.

8. Schaltungsanordnung nach einem der vorhergehenden Ansprüche, dadurch gekennzeichnet, daß der Wechselrichter (12, 13) als Gegentaktwechselrichter mit Transistoren (12, 13) aufgebaut ist.

9. Schaltungsanordnung nach einem der vorhergehenden Ansprüche, dadurch gekennzeichnet, daß Steuerelemente (12, 13) des Wechselrichters (12, 13) mit Impulsen konstanter Frequenz und veränderlicher Impulsbreite gespeist sind.

10. Schaltungsanordnung nach einem der vorhergehenden Ansprüche, dadurch gekennzeichnet, daß ein Ende der Sekundärwicklung (25) des Transformators (22) auf ein Massepotential (27) gelegt ist.

11. Schaltungsanordnung nach einem der vorhergehenden Ansprüche, dadurch gekennzeichnet, daß als Führungsgröße der Steuerelemente (12, 13) des Wechselrichters (12, 13) ein dem Sollwert der Lampenleistung entsprechendes Signal (P') dient.

12. Schaltungsanordnung nach Anspruch 11, dadurch gekennzeichnet, daß das Führungssignal (P') des Wechselrichters (12, 13) mittels eines Funktionsblocks (14.1) gebildet wird, welcher aus dem Lampenstrom (I) oder der Lampenspannung (U) ein Korrektursignal (U') entsprechend der Abweichung vom Sollwert der Lampenleistung bildet.

13. Schaltungsanordnung nach Anspruch 12, dadurch gekennzeichnet, daß die Leistungs-Hyperbel des Funktionsblocks (14.1) durch wenigstens eine Gerade (I) nachgebildet ist.

14. Schaltungsanordnung nach Anspruch 12 oder 13, dadurch gekennzeichnet, daß die Leistungshyperbel (P) durch zwei Geraden (I, II) nachgebildet ist, wobei entsprechend der einen Geraden (I) der Sollwert der Lampenleistung (P') im Dauerbetrieb der Lampe (36) korrigiert wird, während die zweite Gerade (II) zur Steuerung der Zünd- und Warmlaufphase der Lampe (36) dient.

## Claims

1. Circuit arrangement for operating a high-pressure gas discharge lamp (36) on a direct-current source (18), particularly in a motor vehicle, with an inverter (12, 13) and with a power regulator (11) which receives at its input (16, 17) control signals derived from the lamp voltage and from the lamp current and control pulses supplied by a pulse generator (15), for supplying the lamp (36) with essentially constant power in continuous operation, characterised in that a transformer (22), fed by the inverter (12, 13), for generating the supply voltage of the lamp (36) is provided, in that the lamp (36) is preceded by a series circuit of a reactor (31) and a first capacitor (32), in that a second capacitor (33) is connected in parallel with the lamp (36), the capacitors (32, 33) being dimensioned in such a manner that the capacitor (33) connected in parallel with the lamp (36) essentially determines the resonant frequency of a series resonant circuit formed by the reactor (31), the first capacitor (32) and the second capacitor (33), and that the pulse generator (15) supplies the power regulator (11) with a resonant frequency of the series resonant circuit (31, 32, 33) for igniting the lamp (36), the ignition frequency being a multiple of the burning frequency of the lamp (36).

2. Circuit arrangement according to Claim 1, characterised in that the impedance of the series capacitor (32) compensates for the impedance of the reactor (31) to such an extent that, with a given lamp voltage (U), the maximum lamp current required for operating the gas discharge lamp (36) is determined.

3. Circuit arrangement according to Claim 1 or 2, characterised in that the capacitances of the two capacitors (32, 33) are dimensioned in the ratio of series capacitor (32) to parallel capacitor (33) as 100:1 to 10:1, preferably in a ratio of 60:1 to 50:1.

4. Circuit arrangement according to one of Claims 1 or 3, characterised in that the reactor (31) is a deliberately developed leakage inductance of the transformer (22).

5. Circuit arrangement according to Claim 4, characterised in that the inductance of the reactor (31) is formed by an additional magnetic core (43) of the transformer (22) without separate winding.

6. Circuit arrangement according to Claim 5, characterised in that a primary winding (23) and a secondary winding (24) of the transformer (22) have a common core (42) and that the secondary winding (25) is associated with the additional core (43) which is connected in parallel with the common core (42) with respect to the magnetic resistance.

7. Circuit arrangement according to one of the preceding claims, characterised in that a current transformer (37), at which the actual value of the lamp current (I) can be picked up, is connected in series with the lamp (36).

8. Circuit arrangement according to one of the preceding claims, characterised in that the inverter (12, 13) is constructed as a push-pull inverter with transistors (12, 13).

9. Circuit arrangement according to one of the preceding claims, characterised in that control elements (12, 13) of the inverter (12, 13) are fed with pulses of constant rate and variable width.

10. Circuit arrangement according to one of the preceding claims, characterised in that one end of the secondary winding (25) of the transformer (22) is connected to an earth potential (27).

11. Circuit arrangement according to one of the preceding claims, characterised in that a signal (P') corresponding to the nominal value of the lamp power is used as reference variable of the control elements (12, 13) of the inverter (12, 13).

12. Circuit arrangement according to Claim 11, characterised in that the reference signal (P') of the inverter (12, 13) is formed by means of a function block (14.1) which forms from the lamp current (I) or the lamp voltage (U) a correction signal (U') in accordance with the deviation from the nominal value of the lamp power.

13. Circuit arrangement according to Claim 12, characterised in that the power hyperbola of the function block (14.1) is simulated by at least one straight line (I).

14. Circuit arrangement according to Claim 12 or 13, characterised in that the power hyperbola (P) is simulated by two straight lines (I, II), the nominal value of the lamp power (P') in continuous operation of the lamp (36) being corrected in accordance with one straight line (I) whilst the second straight line (II) is used for controlling the ignition and warm-up phase of the lamp (36).

## Revendications

1. Circuit pour faire fonctionner une lampe luminescente à gaz à haute pression (36) sur une source de courant continu (18), en particulier dans un véhicule à moteur, avec un onduleur (12, 13) et avec un régulateur de puissance (11), qui à son entrée (16, 17) reçoit des impulsions de commande dérivées de la tension de la lampe et de l'intensité de la lampe et des impulsions de commande délivrées par un générateur d'impulsions (15) pour l'alimentation de la lampe (36) avec une puissance essentiellement constante en fonctionnement continu, circuit caractérisé en ce qu'un transformateur (22) alimenté par l'onduleur (12, 13) est prévu pour produire la tension d'alimentation de la lampe (36), en ce qu'un circuit en série est monté en amont de la lampe (36), circuit se composant d'un ballast inductif (31) et d'un premier condensateur (32), en ce qu'un deuxième condensateur (33) est monté en parallèle à la lampe (36), les condensateur (32, 33) étant dimensionnés de telle façon que le condensateur (33) monté en parallèle à la lampe (36) détermine essentiellement la fréquence de résonance d'un circuit oscillant en série formé du ballast inductif (31) du premier condensateur (32) et du deuxième condensateur (33) et en ce que le générateur d'impulsions (15) alimente le régulateur de puissance (11) pour allumer la lampe (36) avec la fréquence de résonance du circuit oscillant en série (31, 32, 33), la fréquence d'allumage atteignant un multiple de la fréquence de décharge de la lampe (36).

2. Circuit selon la revendication 1, caractérisé en ce que l'impédance du condensateur en série (32), compense l'impédance du ballast inductif (31) jusqu'à ce que pour une tension de la lampe définie (U), l'intensité maximale de la lampe nécessaire à l'allumage de la lampe luminescente à gaz (36) soit déterminée.

3. Circuit selon la revendication 1 ou 2, caractérisé en ce que les capacités des deux condensateurs (32, 33) sont dimensionnées dans le rapport condensateur en série (32) à condensateur en parallèle (33) allant de 100 à 1 jusqu'à 10 à 1, de préférence dans un rapport allant de 60 à 1 jusqu'à 50 à 1.

4. Circuit selon la revendication 1 ou 3, caractérisé en ce que le ballast inductif (31) est une inductance de fuite, formée de façon appropriée, du transformateur (22).

5. Circuit selon la revendication 4, caractérisé en ce que l'inductance du ballast inductif (31) est formée par un noyau magnétique additionnel (43) du transformateur (22) sans enroulement séparé.

6. Circuit selon la revendication 5, caractérisé en ce qu'un enroulement primaire (23) et un enroulement secondaire (24) du transformateur (22) possèdent un noyau commun (42) et en ce que l'enroulement secondaire (25) est associé au noyau additionnel (43), qui est monté en parallèle au noyau commun (42) en ce qui concerne la résistance magnétique.

7. Circuit selon l'une des revendications précédentes, caractérisé en ce qu'en série avec la lampe (36) est monté un transformateur d'intensité (37), sur lequel peut être prélevée la valeur effective de l'intensité de la lampe (I).

8. Circuit selon l'une des revendications précédentes, caractérisé en ce que l'onduleur (12, 13) est monté comme un onduleur symétrique avec des transistors (12, 13).

9. Circuit selon l'une des revendications précédentes, caractérisé en ce que les éléments de commande (12, 13) de l'onduleur sont alimentés avec des impulsions de fréquence constante et une largeur d'impulsions variable.

10. Circuit selon l'une des revendications précédentes, caractérisé en ce qu'une extrémité de l'enroulement secondaire (25) du transformateur (22) est mise au potentiel de la masse (27).

11. Circuit selon l'une des revendications précédentes, caractérisé en ce qu'un signal (P') correspondant à la valeur de consigne de la puissance de la lampe sert de grandeur de guidage des éléments de commande (12, 13) de l'onduleur.

12. Circuit selon la revendication 11, caractérisé en ce que le signal de guidage (P') de l'onduleur (12, 13) est formé au moyen d'un bloc fonctionnel (14.1), qui forme à partir de l'intensité de la lampe (I) ou de la tension de la lampe (U) un signal de correction (U') correspondant à l'écart par rapport à la valeur de consigne de la puissance de la lampe.

13. Circuit selon la revendication 12, caractérisé en ce que l'hyperbole de puissance du bloc fonctionnel (14.1) est simulée par au moins une ligne droite (I).

14. Circuit selon la revendication 12 ou 13, caractérisé en ce que l'hyperbole de puissance (P) est simulée par deux lignes droites (I, II), la valeur de consigne de la puissance de la lampe (P') étant corrigée en fonction de l'une des lignes droites (I) dans le fonctionnement continu de la lampe (36), tandis que la deuxième ligne droite (II) sert à commander la phase d'allumage et de chauffage de la lampe (36).
